# EUROPEAN PATENT APPLICATION

(11) **EP 2 930 829 A1**
(43) Date of publication of application: **14.10.2015**
(21) Application number: 14164161.3
(22) Date of filing: 10.04.2014
(51) Int. Cl.: H02K 15/00, H02K 15/06, H02K 15/04

(54) **C-shaped or U-shaped half-coil, rotor winding with such a half-coil and its manufacturing method**

(71) Applicant: ALSTOM Technology Ltd, 5400 Baden (CH)
(72) Inventor: Haldemann, Johann, 5242 Birr (CH); Cui, Xiaoli, 5200 Brugg (CH); Auge, Christian, 68305 Mannheim (DE); Meinecke, Carsten, 76199 Karlsruhe (DE); Mundstock, Matthias, 67117 Limburgerhof (DE); Soehner, Walter, 76149 Karlsruhe (DE)
(74) Representative: Alstom Technology Ltd

(57) **Abstract**

The present invention relates to a winding (20) of a rotor of a rotating electrical machine, in particular, to C-shaped or U-shaped half-coils (8,8') used for the winding (20) of a rotor after a re-winding operation. Moreover, the invention includes a method of a winding of an electrical machine rotor which comprises a reduced axial length due to the re-winding operation. According to preferred embodiment of the invention, said half-coils (8,8'), instead of being manufactured as double hollow conductors, are provided in the form of two separate conductors (9,10), which comprise a single hollow each and which are adjacently embedded within respective slots of the rotor body.

## Description

### FIELD OF THE INVENTION

The present invention relates to a winding of a rotor for use in rotating electrical machines. More in particular, the present invention relates to innovative half-coils used for the winding of the rotor. Moreover, the invention pertains to a method for winding a rotor body of an electrical machine.

### BACKGROUND

As well known, the conversion of rotating mechanical energy into electric energy and vice versa is done by generators and by motors, respectively.
Motors or generators comprise a stator and a rotor. The rotor of the machine rotates inside the stator bore of the stator. For the conventional synchronous machines, the magnetic field is excited typically through the current-carrying field windings placed in the rotor body made of magnetic material. The combination of the number of the rotor poles and the rotational speed in revolutions per minute (rpm) determines the frequency of the rotating magnetic field.
Rotors are generally manufactured with a certain number of coils, each embedded in the respective slot arranged in the rotor body. In particular, each coil comes in the form of a stack of conductors called turns, generally made of copper. The rotor winding is made of a plurality of coils, each extending parallel to the rotor axis along the rotor body. Each coil comes normally in the form of two opposite symmetric substantially C-shaped half-coils. Each half-coil has at its axial ends, two diametrically opposed radius portions, which form the rotor end winding, each one joined with the respective radius portion of the opposed half-coil, thus forming a complete rotor coil with all coils making up the rotor winding.
Typically, the joining of the half-coils in correspondence of the radius portions is accomplished by a brazing process, wherein the turns to be joined, located at both ends of the coil, are individually or in stacks heated to the braze temperature after the brazing alloy is positioned in the joint area.
The turns used for the half-coils are usually hollow, having one or two channels running throughout their axial length. Such channel is needed in order to guide a fluid within the conductor for cooling purposes, since the current flows generate heat which must be removed from the machine.
The conductors usually come in the form of single hollow conductors, having a sole axial channel, or double hollow conductors, having a couple of channels running internally. The hollow conductors can be solidly formed or made from C-Sections (single hollow conductor) respectively E-Sections (double hollow conductor). The choice of designing the rotor winding with single-hollow conductors or double-hollow conductors mostly depends on the required power that must be delivered and the required mechanical strength of the coils. Double-hollow conductors are usually installed for high-power machines, while single-hollow conductors can be suitable for machines of less power.
However, the manufacturing of the double-hollow conductors, required for high-power machines, is usually more complex and time-consuming compared to the production of the single-hollow conductors, which results in a higher manufacture cost. A double-hollow conductor is mechanically stronger and deforms less compared to a single hollow conductor of the same width.
Furthermore, it is known practise to manufacture half-coils wherein the radius portions are brazed at its corners. Corner brazing is usually avoided; instead, the rotor winding, in which the half-coils have radius end portions obtained by bending, is preferred. In fact, the brazing process, besides being a time-consuming and expensive process, cannot fully guarantee during the whole life of the machine the integrity and stability of the rotor winding.
However, a suitable solution for replacing corner brazed rotor coils is challenged by limited axial space underneath the retaining ring.
On rotors where the original design has brazed joints (corner brazing or brazed-on bow section) in the rotor end winding, a rewind solution necessarily has to have brazed corner joints as well, in order to meet the spatial constraints, i.e. the available space in axial direction under the retaining ring. In fact, bent corners tend to occupy more room, in the axial direction, with respect to brazed corner designs, where a bow section with different / smaller section is brazed on to save axial space. As a consequence, replacing the old winding with bent corners in the rotor end winding implies the replacement of the old retaining ring with a larger one.
Nevertheless, supplying a new retaining ring with larger axial dimension is not always technically feasible and a disadvantage in terms of price competitiveness may be experienced.

### SUMMARY OF THE INVENTION

The object of the present invention is to solve the aforementioned technical problems by providing an innovative C-shaped half-coil for the winding of a rotor body as substantially defined in independent claim 1, a winding for a rotor body and an electrical machine as substantially defined respectively in dependent claims 10 and 11. Furthermore, a method is provided for winding a rotor body as substantially defined in independent claim 12.
Preferred embodiments are defined in correspondent dependent claims.
According to preferred embodiments of the invention, which will be described in the following detailed description only for exemplary and non-limiting purposes, the C-shaped half-coils, instead of being manufactured as double-hollow conductors, are provided in the form of two single-hollow conductors which are adjacently embedded within a respective slot of the rotor body.

In this way, the manufacturing process is improved because, as mentioned above, the production of single-hollow conductors is faster and cheaper versus the production of double-hollow conductors. Advantageously, this leads to an improved process in the manufacturing of electrical machines having conductors which require two cooling channels.
Moreover, this solution further improves a rewind process of the rotor body, providing coils having bent corners (in place of the existing ones having brazed corners or brazed-on bow sections without the need of replacing the retaining ring.
In fact, as the half-coils are provided in the configuration of two separate single-hollow conductors, only one conductor runs all way through the bent part of the end winding, while the other one ends after leaving the rotor body.
It has been demonstrated that such arrangement works at least for the inner coils of the winding, which are shorter and thus have the thermal margins to reduce the cross section around their end winding portion.
The separate single conductors can be electrically contacted by different contact techniques, such as soldering, friction welding, riveting, screwing, crimping, contact sleeves, contact bridges, contact strips... Therefore, according to preferred aspects of the invention, costly and time-consuming corner brazing can be omitted and broader supplier base together with shorter delivery time for single-hollow conductors instead of double-hollow conductors are achieved.
According to preferred embodiments, an advantageous way proposed to secure electrical contact between adjacent separate single conductors features a radial arrangement utilizing the centrifugal force to facilitate and enhance the electrical (galvanic) contact between the adjacent upper and lower layer conductors lying one above the other forming a turn, thus the joining (e.g. brazing) of these two adjacent conductors can be spared, meaning less efforts and lower cost owing to without the need of joining
(brazing) process, as it will be fully explained in the detailed description of preferred embodiments of the invention.
Regarding this radial arrangement, the following aspects need to be noted: sufficiently good contact shall be maintained along all the defined areas of the conductors; dimensional tolerances shall be prevented from varying due to deformation during e.g. assembly and possible axial moving shall be avoided due to vibration.
Moreover, joining the conductors of one layer in the configuration top to bottom together to form a turn, the winding is subjected to less vibration during operation, and less effort is needed to deal with the joining points along the conductors, which are a relevant number as such conductors have lengths usually of several meters.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Photo 1 is a perspective view of a winding mounted on a rotor body with bent corners belonging to the state of the art;
Figures 2, 3 are respectively a perspective view and a plant view of a portion of C-shaped half-coil according to a first preferred embodiment of the present invention;
Figures 4, 5 and 6 are respectively a perspective view, a developed view and a cross section view of a portion of C-shaped half-coil of the first preferred embodiment of the present invention according to a variant particularly configured for rewinding operations;
Figure 7 shows a developed view of a rotor winding according to the present invention;
Figure 8 shows a cross-sectional view along a section line A-A' of figure 7;
Figure 9 and 10 show respectively a cross section and a perspective view of a half-coil according to a preferred second embodiment of the present invention;
Figures 11 and 12 show respectively a perspective view and a plant view of a portion of C-shaped half-coil of the second preferred embodiment of the present invention according to a variant particularly configured for rewinding operations;
Figure 13 illustrates a cross section of the half-coil of figures 11 and 12;
Figure 14 illustrates various alternatives for the bottom layer of the half-coil of figure 11;
Figure 15 shows a cross section of a half-coil of figures 11 and 12.

### DETAILED DESCRIPTION OF THE DRAWINGS

With reference to photo 1, it shows a state-of-the-art electrical machine 1. In particular, the photo 1 shows a view of a rotor body generally indicated with reference 2. The rotor body 2 comprises a plurality of axial slots 3. A state of the art C-shaped half-coil 4' is embedded in a respective slot 3 of the rotor body 3. The C-shaped half-coil 4' comprises an axial active portion 41' running through the rotor slot 3 and two opposite bent radius winding end portions, which are positioned out of the slot. In the photo only the bent portion 42' is visible. Each C-shaped half-coil 4' is joined to a correspondent opposed C-shaped half-coil 5', as clearly showed in the photo. Half-coils 4' and 5' form a complete coil. All coils wound around the rotor body 2 make up the rotor winding, generally indicated in the photo with numeral 100.
Still making reference to the half-coil 4' according to the state of the art, the half-coil 4' comprises a plurality of stacked conductors, called turns, usually made of copper. Each turn of the stack is electrically insulated from the adjacent turn belonging to the same half-coil.

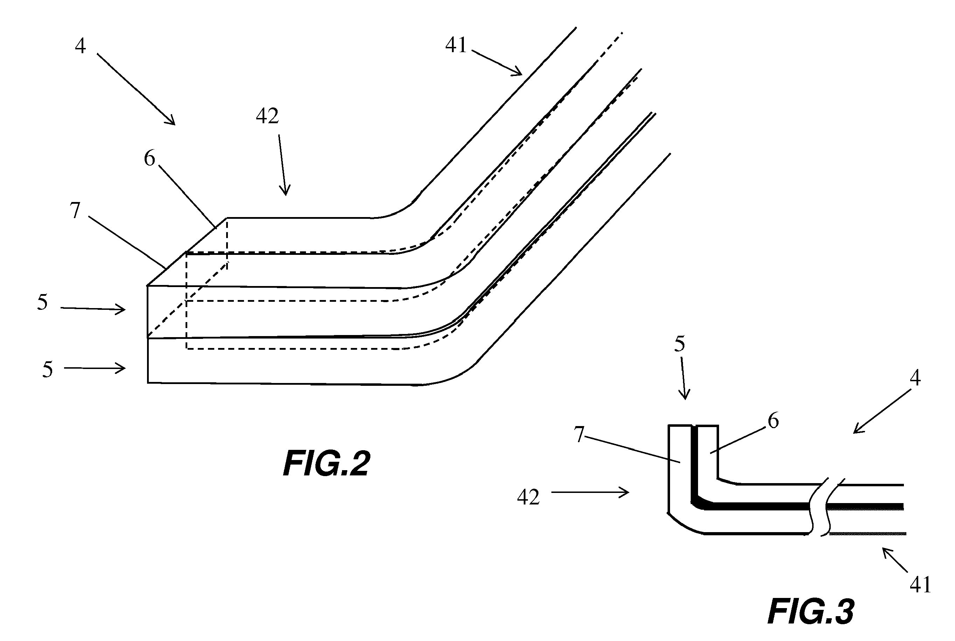

Making now reference to following figures 2 and 3, it is shown a portion of a C-shaped half-coil 4 according to a first embodiment of the present invention in a perspective and developed view, respectively. In particular, the C-shaped half-coils comprises an active portion 41, configured to be embedded in a respective rotor slot, and two opposite bent radius winding end portions, of which only bent portion 42 is visible in the figure. The half-coil 4 comprises a stack of turns 5 electrically insulated from each other. Each turn 5 of the stack of turns of the half-coil 4 comprises two separate adjacent single conductors 6 and 7. Conductors 6 and 7 are electrically connected to each other in order to assure the flow of current between them. Said differently, the turns 5 are disposed on top of each other whilst conductors 6 and 7 are positioned side by side such to be mechanically and electrically in parallel. Preferably, each single conductor 6 and 7 of turn 5 is a hollow conductor, having an inner cooling channel running through its axial development (not visible in the figures). Therefore, the positioning side by side of separate single conductors 6 and 7, electrically connected to each other, advantageously ensures the same functionalities of a state-of-the-art double hollow single conductor whilst facilitating the manufacturing process.

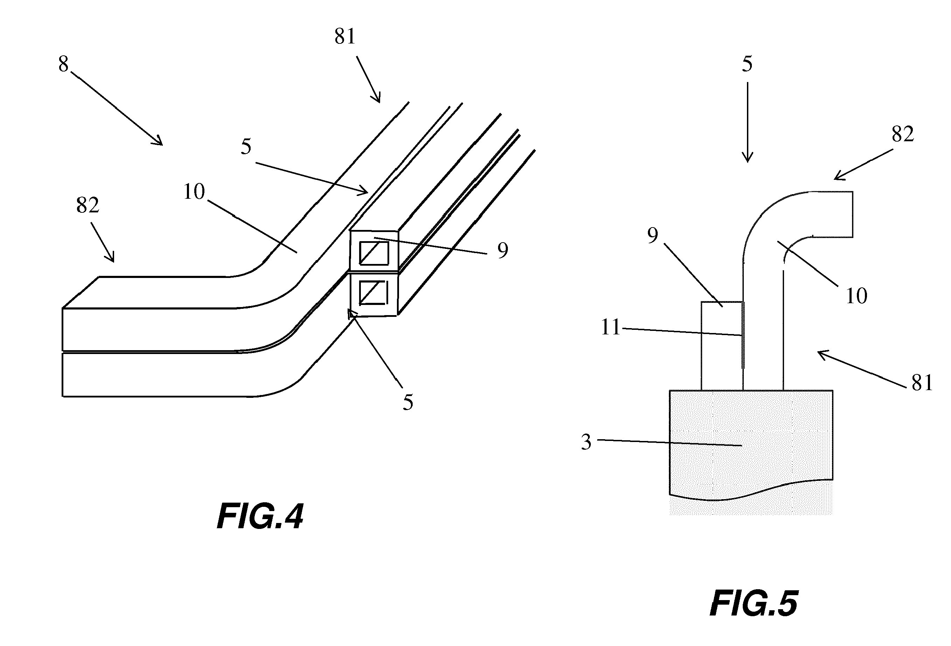

With reference now to figure 4, it is shown a portion of a half-coil 8 according to a preferred embodiment, particularly configured for operating rewinding operations. The C-shaped half-coil 8 comprises, in a similar manner, an active portion 81, configured to be embedded in a respective rotor slot, and two opposite bent radius winding end portions, of which only bent portion 82 is visible in the figure. The half-coil 8 comprises a stack of turns 5 electrically insulated from each other. Each turn 5 of the stack of turns of the half-coil 8 comprises two separate adjacent single first and second conductors 9 and 10. Conductors 9 and 10 are electrically connected to each other in order to assure the flow of current between them. In this variant, advantageously, first conductor 9, which is the outer conductor of turn 5, is a straight conductor having its axial ends protruding outside the respective rotor slot 3 when embedded within the rotor body (not shown), and located in the proximity of respective bent radius portions (in the figure only bent portion 82 is visible). This way, the absence of the outer bent portion of conductor 9 running adjacently to the bent portion 82 of conductor 10 allows a substantial reduction of space required in the axial direction for the positioning of the related turn. It has been shown that this arrangement can be established at least for the first inner coils wound on the rotor body where the limited length of the bent portions (which are joined to respective bent portions of opposite half-coils) still allows the transit of the current on a single conductor instead of two without incurring in overheating problems. With particular reference to figure 5, the turn 5 further comprises electrical contact means 11 interposed between adjacent conductors 9 and 10. According to this exemplary non limiting embodiment, such contact means 11 are located substantially in proximity of the axial ends of the first conductor 9. Alternatively, first and second conductors 9, 10 of turn 5 may be in electrical contact thought out their length around the rotor body. Different techniques, known to those skilled in the art, may be used in order to electrically connect the first and second conductors 9 and 10 of the turn 5 such as soldering, silvering, friction welding, riveting, screwing, crimping, contact sleeves, contact bridges, contact strips.

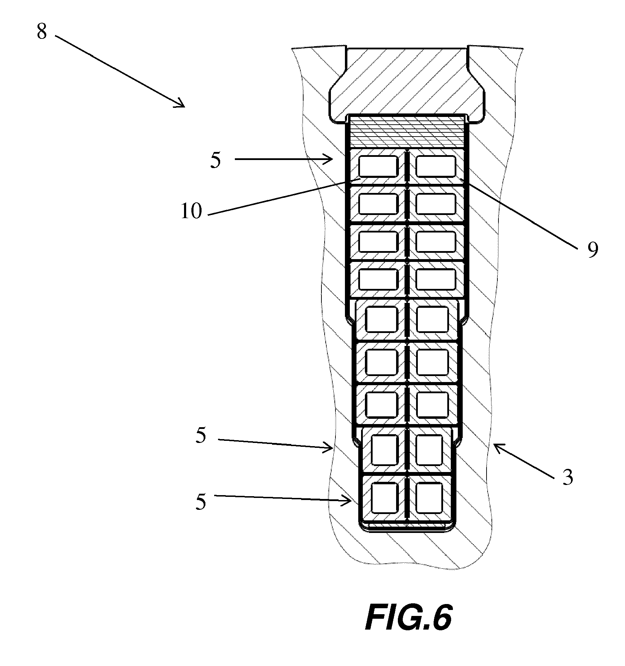

With reference to figure 6, it is shown a cross-sectional view of a C-shaped half-coil of figures 4 and 5 embedded in a respective rotor slot 3. In particular, it is visible the half-coil formed by a plurality of electrically insulated turns 5 positioned on top of each other. Each turn 5, comprises two separate single conductors 9 and 10, positioned side by side and electrically contacted to each other, as specified above. Preferably, separate single conductors 9 and 10 are hollow conductors, having a cooling channel running throughout their length.

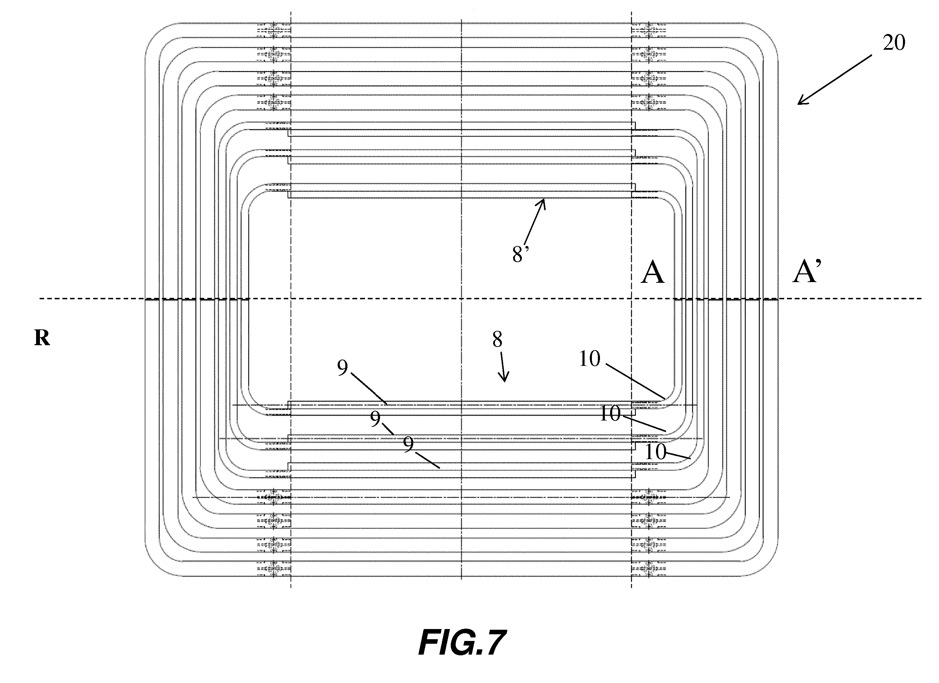

With reference now to next figure 7, it is shown a developed view of a rotor winding, generally indicated with reference numeral 20. The rotor winding 20 comprises the plurality of C-shaped half-coils 8, each one embedded in a respective rotor slot (not shown) and being joined to a respective opposite half-coil 8' in order to form the complete winding. As shown, the first inner three half-coils comprises two single conductors 9 and 10 wherein conductors 9 are straight having axial ends in proximity of bent portions of adjacent conductors 10 such that the room required for the rotor winding is sensibly reduced because of absence of radius portions of single conductors 9. This way, existing rotor winding having brazed corners can be replaced by a new rotor winding 20 during re-winding operation because of the reduction of axial space thus achieved.

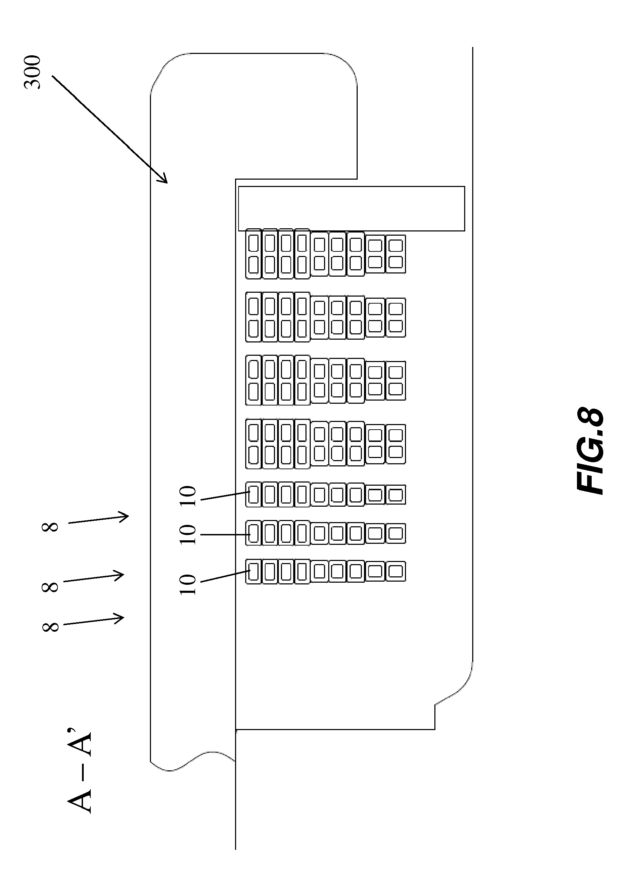

Figure 8 shows a cross-sectional view along a section line A-A' of figure 8. In particular, the figure depicts the single conductors 10 for the first inner half-coils 8 as described above. Moreover, the figure shows a retaining ring of the electrical machine generally indicated with reference 300.

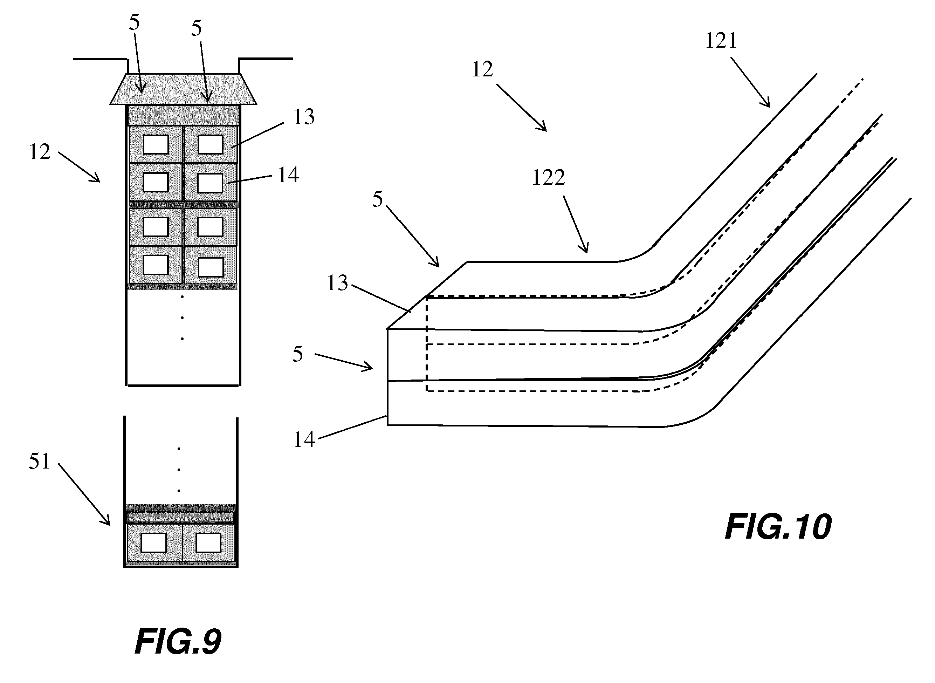

With reference now to figure 9, it shows a cross-sectional view of a portion of a C-shaped half-coil 12 according to a second preferred embodiment of the present invention. Similarly, the half-coil 12 comprises an active portion 121, configured to be embedded in a respective rotor slot, and two opposite bent radius winding end portions, of which only bent portion 122 is visible in the figure. The half-coil 12 comprises a stack of turns 5 electrically insulated from each other. Each turn 5 of the stack of turns of the half-coil 12 comprises two separate adjacent single conductors 13 and 14 forming a turn. Conductors 13 and 14 are electrically connected to each other in order to assure the flow of current between them. In this second embodiment different from the first preferred embodiment, the turns 5 are disposed, in pairs, side by side, whilst conductors 13 and 14 are positioned on top of each other such to be mechanically end electrically in parallel As for the first embodiment, each single conductor 13 and 14 of turns 5 is a hollow conductor, having an inner cooling channel running through its axial development (not visible in the figure).

Figure 10 better shows the arrangement of the turns 5 of half-coil 12. In particular, turns 5 are positioned, in pairs, side by side each one comprising separate single conductors 13 and 14 disposed on top of each other. Conductors 13 and 14 are in electric contact between each other, as above specified, whilst turns 5 are electrically insulated in between. For half-coils having an odd number of turns, a last turn 51 at the bottom of the stack may be provided according to the first preferred embodiment, the last turn 51 having single conductors positioned side by side. As it will be described in details with reference to the following figures, such arrangement assures a reliable and strong contact between single conductors of the same turn, without the particular need of interposing electrical contacting means for letting the flow of current, exploiting centrifugal forces experienced by the rotor coils which are generated in the electrical machine during operation.

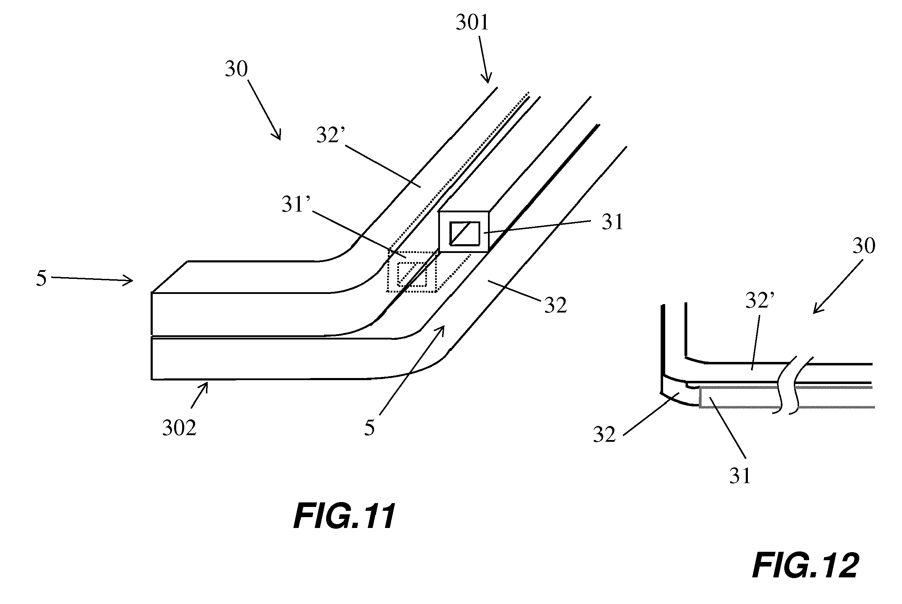

Making now references to following figures 11 and 12, it is shown a portion of a half-coil 30 according to a variant of the second embodiment particularly suitable for operating re-winding operations.
More in particular, half-coil 30 comprises, in similar manner, an active portion 301, configured to be embedded in a respective rotor slot, and two opposite bent radius winding end portions, of which only bent portion 302 is visible in the figure. The half-coil 30 comprises a stack of turns 5 electrically insulated from each other. Each turn 5 of the stack of turns of the half-coil 30 comprises two separate adjacent single first and second conductors 31 and 32. Conductors 31 and 32 are electrically connected to each other in order to assure the flow of current between them. In this variant, advantageously, first conductor 31 is a straight shorter conductor having its axial ends protruding outside the respective rotor slot when embedded within the rotor body (not shown), and located in the proximity of respective bent radius portions (in the figure only bent portion 32 is visible). Turns 5 are positioned in pairs, side by side. In the portion of the half-coil illustrated, two turns are shown, comprising, respectively, first single straight conductor 31 and second conductor 32 and first single straight conductor 31' and second conductor 32'. Advantageously, the arrangement is such that, for each pair of turns positioned side by side, first and second conductors are disposed on top of each other such that the first straight conductor 31 abuts on second conductor 32' of the adjacent turn and second conductor 32 about on the first straight conductor 31'. Moreover, in advantageous way, the bent radius portions of second conductor 32 are arranged aligned with corresponding bent radius portions of second conductor 32' of the adjacent turn.
Such arrangement is particularly advantageous as it allows compacting the room required by the stack of coils without exceeding in the axial direction, and at the same time it allows the particular disposition of having single conductors of each turn disposed on top of each other, thus exploiting the centrifugal forces for establishing a strong contact between them for ensuring the flow of current.

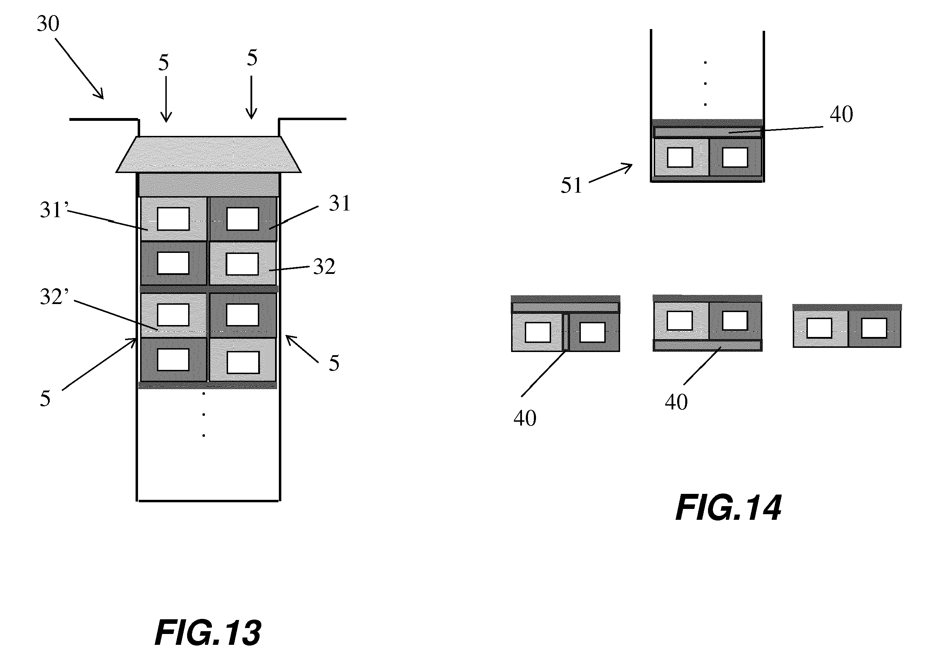

Following figure 13 shows a cross sectional view of the half-coil 30 of preceding figures 9 and 10.

With reference to figure 14, for half-coils having an odd number of turns, the turn 51 at the bottom of the stack may be provided in the form of two single separate conductors positioned side by side, as for the first preferred embodiment. To enhance the electrical contact, a copper strip 40 may be provided in different configurations between the two conductors.

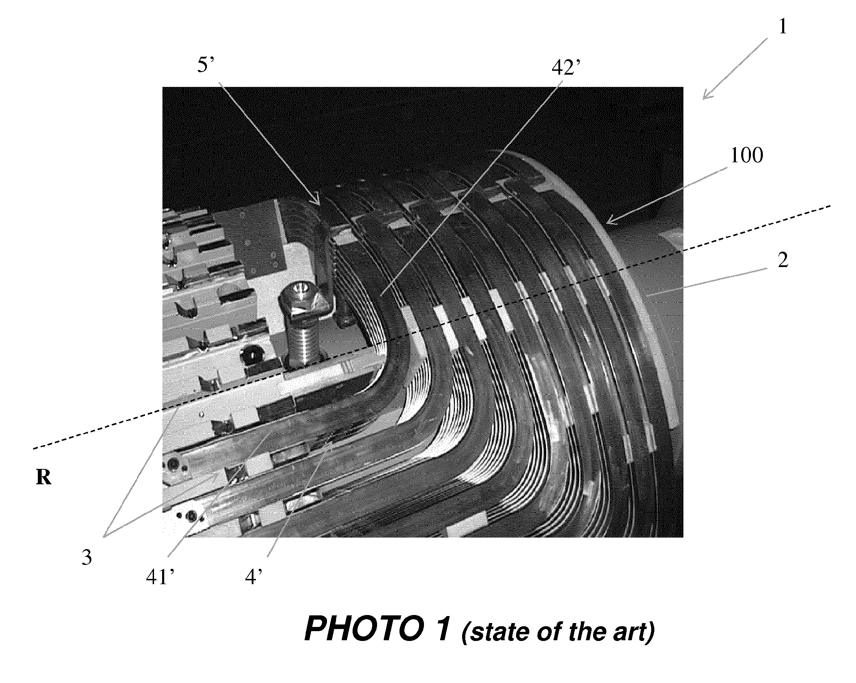

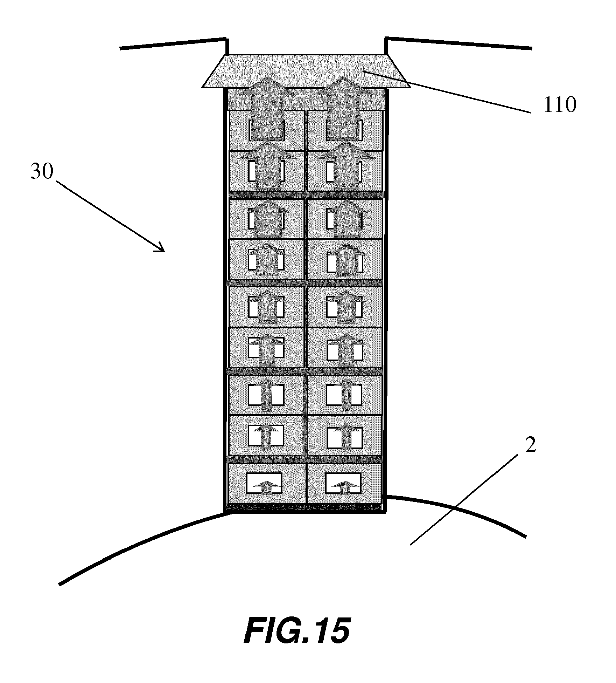

Last figure 15 shows with more details the principle of the exploitation of the centrifugal forces for ensuring a tight contact between single conductors of the same turn. As shown by the increasing sizes of the arrows, centrifugal forces intensify with the distance of the turn from the centre of the rotor body 2. The reaction to the centrifugal forces, which actually keeps conductors in each turn in a forced electrical contact is offered by a rotor slot wedge 110 which encloses the rotor winding.
Moreover, the present invention is also directed, with reference to the described figures, to a method for winding a rotor body 2 of an electrical machine 1. The winding operation may also be a re-winding, that is removing the existing rotor winding and replacing it with a new one. The method according to the invention comprises embedding in each slot 3 of the rotor body a respective conductive C-shaped half-coil, the half-coil comprising an axial active portion running through the slot parallel to a rotating axis R of the rotor body 2, shown in figures 1 and 7, and two opposite bent radius winding end portions. The half-coil comprises a stack of turns electrically insulated from each other, wherein each turn of said stack of turns is provided in the form of two separate single conductors, adjacently positioned along the slot 3 and electrically connected to each other. According to preferred embodiments, (6) of the two separate single conductors comprise a first single conductor which is a straight conductor and a second conductor of said two separate single conductors is C-shaped comprising two opposite bent radius portions. The first conductor protrudes out of the rotor body 2 and has its axial ends located in proximity of respective bent radius portions. Advantageously, providing half-coils so configured for at least the first three inner coils of the winding, the re-winding can be effected limiting the required axial space, as detailed above. According to a first preferred embodiment, the turns of at least one half-coil are disposed along a radial direction and the first and second conductors are positioned along a circumferential direction with respect to the rotating axis **R** of the rotor body 2.
According to a second preferred embodiment, the first and second conductors of each turn are positioned along a radial direction and the turns of at least a half-coil are positioned, in pairs, along a circumferential direction, such that the first conductor of turn abuts on a second conductor of adjacent turn, wherein the pairs of turns are arranged within the respective slot along a radial direction.
The method further comprising providing a slot wedge 110 supporting the half-coils such that, during operation, first and second conductor are pressed to each other due to centrifugal forces.

Although the present invention has been fully described in connection with preferred embodiments, it is evident that modifications may be introduced within the scope thereof, not considering the application to be limited by these embodiments, but by the content of the following claims.

## Claims

1. C-shaped half-coil (4, 8, 12, 30) for the winding of a rotor body (2) of an electrical machine (1), the rotor body (2) comprising axial slots (3), said C-shaped half-coil (4, 8, 12, 30) comprising an active portion (41, 81, 121, 301) configured to be embedded through the respective rotor slot (3) and two opposite bent radius winding end portions (42, 82, 122, 302), said half-coil (4, 8, 12, 30) comprising a stack of turns (5) electrically insulated from each other and being ***characterised in that*** each turn (5) of said stack of turns (5) is provided in the form of two separate adjacent single conductors (6, 7; 9, 10; 13, 14; 31, 32) electrically connected to each other.

2. C-shaped half-coil (8, 30) according to the preceding claim, wherein a first conductor (9, 31) of said two separate single conductors (9, 10; 31, 32) is a straight conductor and a second conductor (10, 32) of said two separate single conductors (9, 10; 31, 32) is C-shaped comprising two opposite bent radius portions (82, 302), said first straight conductor (9, 31) having its axial ends located in proximity of respective bent radius portions (82, 302) of said second conductor (10, 32).

3. C-shaped half-coil (8, 30) according to the preceding claim, further comprising electrical contact means (11) positioned between said first (9, 31) and second (10, 32) conductors, said electrical contact means (11) being located substantially in proximity of the axial ends of said first conductor (9, 31).

4. C-shaped half-coil (8, 30) according to the preceding claim, wherein said electrical contact means (11) comprises at least one of: soldering; silvering; friction welding; riveting; screwing; crimping; contact sleeves; contact bridges; contact strips.

5. C-shaped half-coil (4, 8, 12, 30) according to any of the preceding claims, wherein said separate single conductors (6, 7; 9, 10; 13, 14; 31, 32) are hollow conductors. 6. C-shaped half-coil (4, 8) according to any of the preceding claims, wherein said turns (5) of said stack of turns (5) are disposed on top of each other and said first and second conductors (6, 7; 9, 10) are positioned side by side.

6. C-shaped half-coil (12, 30) according any of claim 2-5, wherein said first and second conductors (13, 14; 31, 32) are positioned on top of each other, said turns (5) being positioned, in pairs, side by side.

7. C-shaped half-coil (30) according to the preceding claim, wherein said first conductor (31) of turn (5) abuts on a second conductor (32') of adjacent turn (5), said pair of turns (5) being arranged on top of each other.

8. C-shaped half-coil (30) according to the preceding claim, wherein bent radius portions (302) of said second conductor (32) of turn (5) are arranged aligned with corresponding bent radius portions (302) of said second conductor (32') of adjacent turn (5).

9. Winding (20) for a rotor body (2) of an electrical machine (1), the rotor body (2) comprising axial slots (3), said winding (20) being ***characterised in that*** it comprises a plurality of half-coils (4, 8, 12, 30) according to any of the preceding claims, the active portion (41, 81, 121, 301) of each half-coil (4, 8, 12, 30) being embedded in a respective slot (3) of the rotor body (2).

10. Electrical machine (1), comprising a rotor body (2) and a winding (20) according to the preceding claim.

11. Method for winding a rotor body (2) of an electrical machine (1), the rotor body (2) having a plurality of slots (3), the method comprising embedding in each slot (3) a respective conductive C-shaped half-coil (4, 8, 12, 30), said half-coil (4, 8, 12, 30) comprising an axial active portion (41, 81, 121, 301) running through said slot (3) parallel to a rotating axis **R** of the rotor body (2) and two opposite bent radius winding end portions (42, 82, 122, 302), said half-coil (4, 8, 12, 30) comprising a stack of turns (5) electrically insulated from each other, the method being ***characterised in that*** each turn (5) of said stack of turns (5) of at least one half-coil (4, 8, 12, 30) is provided in the form of two separate single conductors (6, 7; 9, 10; 13, 14; 31, 32), adjacently positioned along the slot (3) and electrically connected to each other.

12. Method for winding a rotor body (2) according to the preceding claim, wherein for each turn (5) of said turn stack (5) of a least one half-coil (8, 30) a first single conductor (9, 31) of said two separate single conductors (9, 10; 31, 32) is a straight conductor and a second conductor (10, 32) of said two separate single conductors (9, 10; 31, 32) is C-shaped comprising two opposite bent radius portions (82, 302), the first conductor (9, 31) protruding out of the rotor body (2) having its axial ends located in proximity of respective bent radius portions (82, 302).

13. Method for winding a rotor body (2) according to claims 11 or 12, wherein said turns (5) of said stack of turns (5) of at least one half-coil (4, 8) are disposed along a radial direction and said first and second conductors (6, 7; 9, 10) are positioned along a circumferential direction with respect to the rotating axis **R** of the rotor body (2).

14. Method for winding a rotor body (2) according to claims 11 or 12, wherein said first and second conductors (13, 14; 31, 32) are positioned along a radial direction and said turns (5) of at least half-coil (12, 30) are positioned, in pairs, along a circumferential direction, such that the first conductor (31) of turn (5) abuts on a second conductor (32') of adjacent turn (5), said pairs of turns (5) being arranged within the respective slot (3) along a radial direction, the method further comprising providing a slot wedge (110) supporting said half-coils (12, 30) such that, during operation, first and second conductors (13, 14'; 31, 32) are pressed to each other due to centrifugal forces.
